# FASCICULE DE BREVET EUROPEEN

(11) **EP 3 847 342 B1**
(45) Date de publication et mention de la délivrance du brevet: **10.08.2022**
(21) Numéro de dépôt: 19783592.9
(22) Date de dépôt: 06.09.2019
(51) Int. Cl.: F01D 11/24, F01D 25/12, F01D 25/14, F02C 7/18

(54) **BOÎTIER D'ALIMENTATION EN AIR SOUS PRESSION D'UN DISPOSITIF DE REFROIDISSEMENT PAR JETS D'AIR**
DRUCKLUFTVERSORGUNGSEINHEIT FÜR EINE LUFTSTRAHLKÜHLVORRICHTUNG
PRESSURIZED-AIR SUPPLY UNIT FOR AN AIR-JET COOLING DEVICE

(30) Priorité: 06.09.2018 FR 1858021
(43) Date de publication de la demande: 14.07.2021
(73) Titulaire: SAFRAN AIRCRAFT ENGINES, 75015 Paris (FR)
(72) Inventeur: METGE, Pierre Jean-Baptiste, 77550 MOISSY-CRAMAYEL (FR); ABADIE, Ghislain Hervé, 77550 MOISSY-CRAMAYEL (FR); CORSAUT, Alexandre, 77550 MOISSY-CRAMAYEL (FR); GARNIER, Fabien Stéphane, 77550 MOISSY-CRAMAYEL (FR); KARIM, Driss, 77550 MOISSY-CRAMAYEL (FR)
(74) Mandataire: Regimbeau
(86) Numéro de dépôt international: PCT/FR2019/052047
(87) Numéro de publication internationale: WO 2020/049259

(56) Documents cités:
- EP-A1- 3 318 725
- FR-A1- 3 040 428
- FR-A1- 3 050 228

## Description

### DOMAINE TECHNIQUE GENERAL

L'invention se situe dans le domaine du refroidissement d'un carter de turbine, notamment une turbine d'une turbomachine, telle qu'un turboréacteur ou un turbopropulseur d'avion.

La présente invention concerne plus précisément un boîtier d'alimentation en air sous pression d'un dispositif de refroidissement par jets d'air d'un carter externe de turbine d'une turbomachine, (notamment une turbine basse pression), un tel dispositif de refroidissement muni d'un tel boîtier, une turbine de turbomachine équipée de ce dispositif de refroidissement et enfin un procédé de fabrication additive par fusion laser sur lit de poudre d'un tel boîtier.

### ETAT DE LA TECHNIQUE

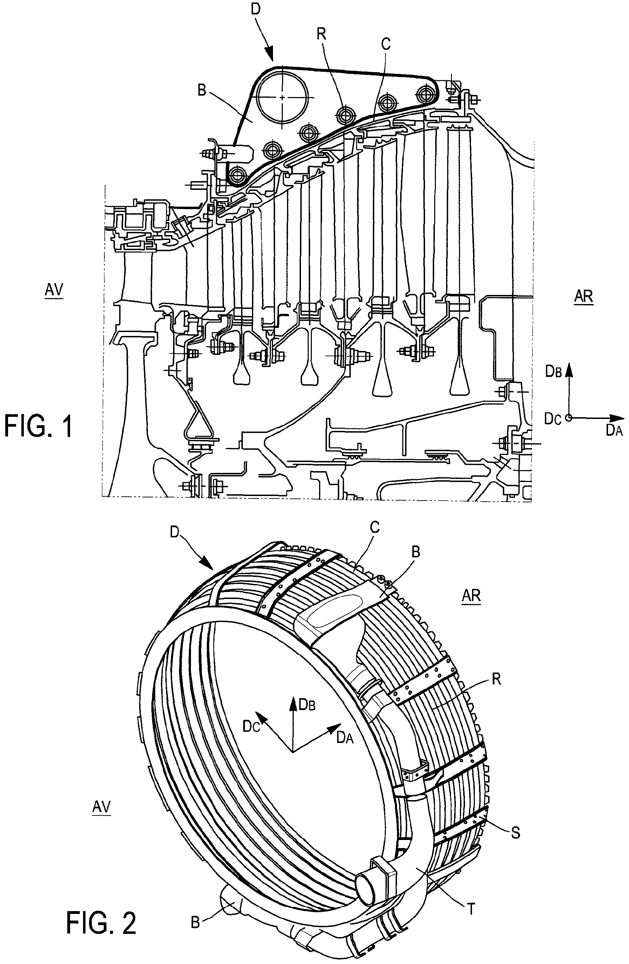

Comme on peut le voir sur les figures 1 et 2 jointes, qui représentent l'état de la technique, la turbine (ici par exemple basse pression) d'une turbomachine est protégée par un carter externe C de forme générale évasée, sensiblement tronconique. Ce carter est refroidi en utilisant la technologie du refroidissement par impact.

Le carter C est équipé d'un dispositif de refroidissement D. Le dispositif D comprend un ou plusieurs boîtiers B d'alimentation en air sous pression, chacun d'entre eux étant raccordé à plusieurs rampes de refroidissement R qu'il alimente en air.

Dans l'exemple de réalisation représenté sur ces figures, le dispositif D comprend deux boîtiers B, positionnés à environ 180° l'un de l'autre, (un seul étant visible sur la figure 1).

Les boîtiers B sont raccordés à une source d'alimentation en air sous pression par un tube T. Différents supports S assurent le maintien des rampes R tout autour du carter C.

Sur ces deux figures et sur les suivantes, ainsi que dans la description et les revendications, le terme « avant » et la référence AV sont utilisés par référence à l'avant de la turbine et le terme « arrière » et la référence AR sont utilisés par référence à l'arrière de la turbine (par rapport au sens de circulation de l'air à l'intérieur de celle-ci).

Chaque rampe de refroidissement R est percée d'une pluralité de perforations qui débouchent au droit de la surface extérieure du carter C. Il en est de même pour le boîtier B. L'air sous pression transitant au travers de ces différentes perforations assure ainsi une ventilation et un refroidissement par impact sur le carter C.

Or, pour qu'un refroidissement par impact de jets d'air soit efficace, il faut que l'air collecté dans le boîtier B alimente les rampes R de façon homogène et optimisée, car sinon il existe un risque que des zones du carter C situées en regard de certaines rampes soient moins bien refroidies que d'autres zones du carter situées en regard d'autres rampes.

De plus, il est préférable de conserver un entrefer constant entre la surface du boîtier B munie des perforations et la peau du carter située en regard, pour assurer un refroidissement homogène.

Or, cela n'est pas toujours le cas avec les boîtiers de l'état de la technique et cela a un impact négatif sur les performances de la turbine et donc de la turbomachine.

On connaît d'après le document FR 3050228 un boîtier d'alimentation en air sous pression d'un dispositif de refroidissement par jets d'air d'un carter externe de turbine d'une turbomachine.

Ce boîtier comprend un conduit coudé d'amenée d'air raccordé à un corps délimitant une enceinte. Ce corps présente une paroi extérieure et une paroi intérieure opposées, cette paroi intérieure étant pourvue d'une pluralité de perforations d'éjection d'air. En outre, les bords longitudinaux respectifs des deux parois intérieure et extérieure du corps se rejoignent pour définir une première série de conduites de sortie situées d'un premier côté longitudinal du corps et une seconde série d'un nombre identique de conduites de sortie situées d'un second côté longitudinal du corps, chaque conduite de sortie étant configurée pour être raccordée à une rampe de refroidissement du dispositif de refroidissement.

Toutefois un tel boîtier n'est pas monobloc et ne peut donc pas être fabriqué par un procédé de fabrication additive. En outre, il ne comprend pas de cloisons de répartition d'air améliorant la distribution de l'air dans les différentes rampes.

Enfin, d'une manière générale, la diminution du poids des pièces embarquées dans un avion est un objectif constant afin de diminuer la consommation en carburant et les coûts associés.

### PRESENTATION DE L'INVENTION

L'invention a donc pour but de résoudre les inconvénients précités de l'état de la technique et de proposer un boîtier d'alimentation en air sous pression qui permette d'obtenir une meilleure répartition de l'air dans l'enceinte du boîtier et donc une meilleure distribution de l'air dans chaque rampe de refroidissement qu'il alimente.

A cet effet, l'invention concerne un boîtier d'alimentation en air sous pression d'un dispositif de refroidissement par jets d'air d'un carter externe de turbine d'une turbomachine, ce boîtier comprenant un conduit coudé d'amenée d'air et un corps délimitant une enceinte, ce corps présentant une paroi extérieure et une paroi intérieure opposées s'étendant selon une direction axiale D_{A}, la paroi intérieure du corps étant pourvue d'une pluralité de perforations d'éjection d'air, les bords longitudinaux respectifs des deux parois intérieure et extérieure du corps se rejoignant pour définir une première série de conduites de sortie situées d'un premier côté longitudinal du corps et une seconde série d'un nombre identique de conduites de sortie situées d'un second côté longitudinal du corps, chaque conduite de sortie étant munie d'une ouverture de sortie configurée pour être raccordée à une rampe de refroidissement du dispositif de refroidissement, ledit conduit d'amenée d'air présentant une portion intérieure, une portion extérieure opposée et deux portions latérales joignant la portion intérieure à la portion extérieure.

Conformément à l'invention, ce boîtier est monobloc, ledit conduit d'amenée d'air coudé est raccordé à la paroi extérieure du corps de façon que son embouchure de sortie débouche dans ladite enceinte et que sa portion intérieure soit située en vis-à-vis de la partie de la paroi extérieure du corps qui s'étend en direction du premier côté dudit corps, et ledit boîtier comprend au moins une cloison de répartition de l'air, disposée dans l'embouchure de sortie du conduit d'amenée d'air, cette cloison joignant la face interne de la portion intérieure du conduit d'amenée d'air à la face interne de la portion extérieure du conduit d'amenée d'air.

Grâce à ces caractéristiques de l'invention, l'air est mieux réparti dans le boîtier et la ou les cloisons de répartition contribue(nt) à mieux distribuer l'air dans les différentes rampes de refroidissement alimentées depuis ledit boîtier.

Le carter de la turbine est mieux refroidi et donc les performances du moteur sont améliorées.

En outre, la forme spécifique de ce boîtier d'alimentation en air et son caractère monobloc permet sa fabrication par un procédé de fabrication additive.

Selon d'autres caractéristiques avantageuses et non limitatives de l'invention, prises seules ou en combinaison :
- la portion intérieure du conduit d'amenée d'air présente, au niveau où l'embouchure de sortie de celui-ci se raccorde à la paroi extérieure du corps, une zone de raccordement en forme de V qui s'étend entre la portion latérale dudit conduit d'amenée d'air et la cloison de répartition de l'air située à côté de cette portion latérale et/ou une zone de raccordement en forme de V,qui s'étend entre deux cloisons voisines de répartition de l'air, selon la direction axiale du boîtier, la pointe du V faisant saillie dans l'espace situé entre la portion intérieure du conduit d'amenée d'air et la partie de la paroi extérieure du corps adjacente audit conduit d'amenée d'air;
- la cloison de répartition d'air se prolonge vers l'intérieur du conduit d'amenée d'air et/ou vers l'intérieur du corps ;
- les bords transversaux des deux parois intérieure et extérieure du corps se rejoignent au niveau d'une extrémité arrière du corps et d'une extrémité avant du corps et en ce que l'embouchure de sortie du conduit d'amenée d'air est raccordé à la partie avant de la paroi extérieure du corps située à proximité de ladite extrémité avant du corps et en ce que ladite cloison de répartition de l'air est incurvée depuis l'embouchure de sortie du conduit d'amenée d'air en direction de l'extrémité arrière du corps ;
- ladite cloison de répartition de l'air est incurvée depuis la portion intérieure du conduit d'amenée d'air en direction de la portion extérieure du conduit d'amenée d'air et de l'extrémité arrière du corps :
- chaque conduite de sortie a la forme d'un entonnoir et la zone de jonction entre la paroi intérieure du corps et la paroi extérieure du corps entre deux ouvertures de sortie successives d'une même série de conduites de sortie est en forme de paraboloïde hyperbolique ;
- le boîtier comprend à l'intérieur du corps, au moins un bec de répartition circonférentielle du flux d'air, en forme de lamelle à section transversale en V, qui s'étend depuis le centre ou sensiblement depuis le centre de la paroi intérieure du corps, de façon que la pointe du V fasse saillie dans l'enceinte du corps, ce bec étant muni d'une pluralité d'encoches autorisant le passage de l'air depuis l'intérieur du corps vers les perforations d'éjection d'air ;
- la paroi intérieure du corps comprend plusieurs bandes formant une surépaisseur de matière, chaque bande s'étendant depuis une ouverture de sortie située du premier côté du corps jusqu'à une ouverture de sortie située du second côté du corps et avec laquelle elle est alignée, les perforations d'éjection d'air sont ménagées au travers de ladite bande en surépaisseur, et cette bande en surépaisseur est incurvée selon une forme en arc de cercle dont le rayon est supérieur au rayon de la section circulaire du carter à refroidir en regard de laquelle ladite bande en surépaisseur est destinée à être positionnée ;
- les bords transversaux des deux parois intérieure et extérieure du corps se rejoignent au niveau d'une extrémité arrière du corps et d'une extrémité avant du corps et ledit boîtier présente au niveau de son extrémité arrière et/ou de son extrémité avant, un élément de fixation du boîtier sur le carter à refroidir, tel qu'une patte de fixation ou une bride de fixation ;
- les différentes parois du corps et du conduit d'amenée d'air présentent un angle maximal de 50° par rapport à un axe de référence du boîtier joignant le centre d'une ouverture de sortie d'une conduite de sortie du second côté longitudinal du corps au centre d'une ouverture de sortie d'une conduite de sortie du premier côté longitudinal du corps, située en face.

L'invention concerne également un dispositif de refroidissement par jets d'air d'un carter externe de turbine d'une turbomachine.

Conformément à l'invention, ce dispositif comprend une pluralité de rampes de refroidissement perforées, incurvées et configurées pour être disposées autour dudit carter externe et au moins un boitier d'alimentation en air sous pression tel que précité, les ouvertures de sortie de ce boitier étant raccordées aux extrémités desdites rampes de refroidissement, de façon à permettre l'alimentation en air sous pression de celles-ci.

L'invention concerne aussi une turbine notamment basse pression, d'une turbomachine, telle qu'un turboréacteur ou un turbopropulseur d'avion, comprenant un carter externe. Elle comprend un dispositif de refroidissement par jets d'air de ce carter tel que précité.

Enfin, l'invention concerne un procédé de fabrication additive par fusion laser sur lit de poudre d'un boitier d'alimentation en air sous pression tel que précité. Conformément à l'invention, ce procédé comprend une étape de dépôt sur un support horizontal, d'un lit d'une poudre du matériau constituant ledit boîtier, puis de balayage par faisceau laser de certains points de ce lit de poudre pour fondre ladite poudre et la durcir et cette étape est répétée jusqu'à obtenir ledit boitier d'alimentation en air sous pression, ces différentes couches de poudre successives étant disposées dans des plans perpendiculaires a une direction de fabrication verticale, cette direction de fabrication verticale étant parallèle ou sensiblement parallèle à un axe de référence du boitier joignant le centre d'une ouverture de sortie d'une conduite de sortie du second côté longitudinal du corps au centre d'une ouverture de sortie d'une conduite de sortie du premier côté longitudinal du corps, située en face, la fabrication du boîtier commençant par les conduites de sortie du second côté longitudinal du corps.

Grâce à ce procédé de fabrication additive, il est possible d'obtenir un boîtier de moindre épaisseur et donc plus léger.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- la figure 1 est une vue en coupe longitudinale axiale d'une turbine basse pression équipée d'un dispositif de refroidissement par jets d'air selon l'état de la technique,
- la figure 2 est une vue en perspective du dispositif de refroidissement de la figure 1, agencé autour du carter de la turbine basse pression,
- la figure 3 est une vue en perspective du boitier de refroidissement conforme à l'invention,
- la figure 4 est une vue de détail d'une partie des conduites de sortie de la figure 3,
- la figure 5 est une vue de détail de la zone d'intersection entre deux conduites de sortie de la figure 4,
- la figure 6 est une vue en perspective et en coupe partielle du boitier de refroidissement de la figure 3, selon un autre angle de vue,
- la figure 7 est une vue de détail et en perspective du bec de répartition circonférentielle du flux d'air, disposé à l'intérieur du boitier de refroidissement conforme à l'invention,
- les figures 8 à 10A sont des vues schématiques en coupe respectivement de côté, de dessus et de face du boitier de refroidissement conforme à l'invention, prises selon les plans de coupe référencés P8, P9 et P10 sur la figure 3,
- la figure 10B est une vue de détail de la figure 10A,
- la figure 11 est une vue schématique représentant le boitier de refroidissement conforme à l'invention, en coupe et placé devant le carter à refroidir,
- la figure 12 est une vue en perspective d'une partie du boîtier coupé selon le plan de coupe référencé P12 en figure 3, et
- la figure 13 est une vue en coupe de dessus du boîtier de refroidissement conforme à l'invention, prise selon le plan de coupe référencé P13 sur la figure 3.

### DESCRIPTION DETAILLEE DE L'INVENTION

Le boîtier 2 d'alimentation en air sous pression conforme à l'invention est un élément d'un dispositif de refroidissement 1 par jets d'air d'un carter externe de turbine d'une turbomachine.

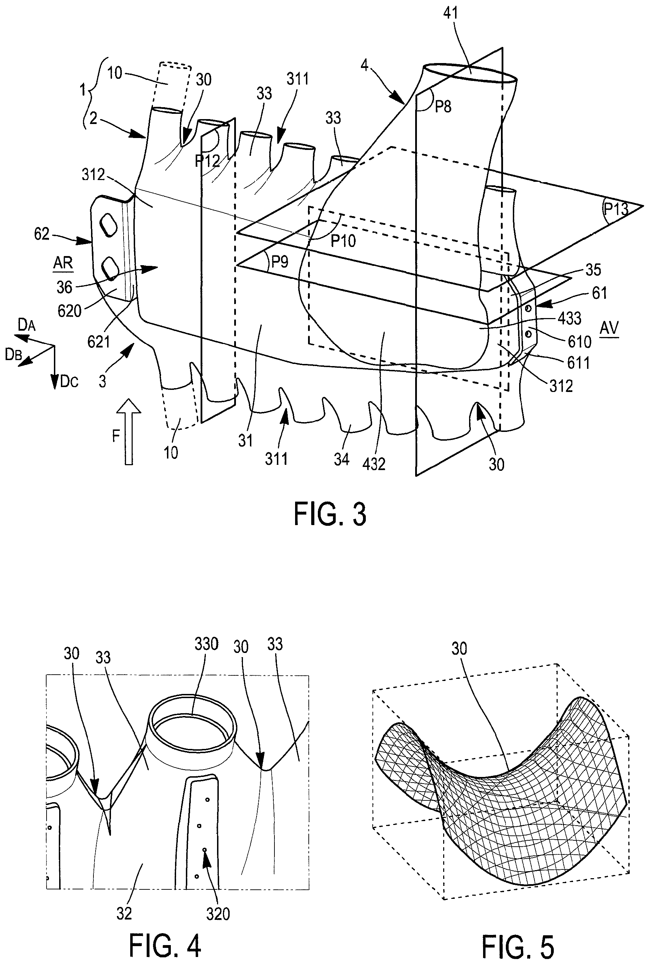

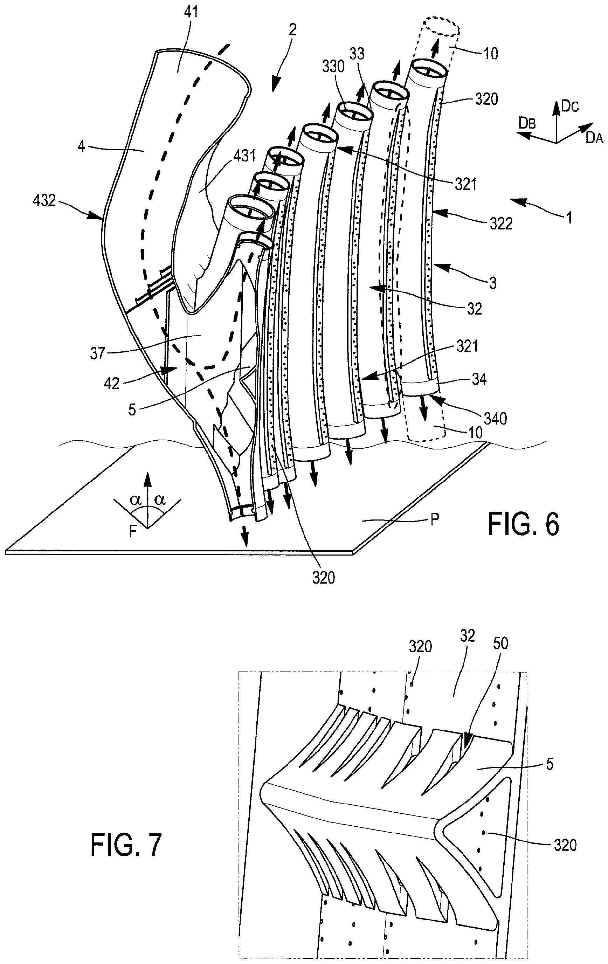

Le dispositif de refroidissement 1 comprend également une pluralité de rampes de refroidissement 10 perforées, incurvées en portion d'arc de cercle et disposées autour du carter externe C de la turbine comme décrit précédemment en liaison avec les figures 1 et 2. Sur les figures 3 et 6, seules deux portions de rampes 10 ont été représentées à des fins de simplification.

Sur les figures 1 et 2, les flèches D_{A}, D_{B} et D_{C} indiquent respectivement la direction axiale, la direction radiale et la direction circonférentielle de la turbine et du carter.

Le boîtier 2 est destiné à remplacer le boîtier B représenté sur les figures 1 et 2 et à être positionné comme ce dernier vis-à-vis du carter de la turbine. Le référentiel des directions a donc été reporté sur les figures 3, 6 et 9 pour montrer l'orientation du boîtier 2.

Le boîtier 2 est monobloc, c'est-à-dire qu'il est réalisé d'une seule pièce, sans soudure ou assemblage de différentes parties. Toutefois, pour pouvoir le décrire, on considère qu'il comprend plusieurs sous-ensembles qui vont être décrits plus en détails.

De préférence, le boitier 2 est fabriqué par un procédé de fabrication additive par fusion laser sur lit de poudre et sa forme a été conçue en conséquence.

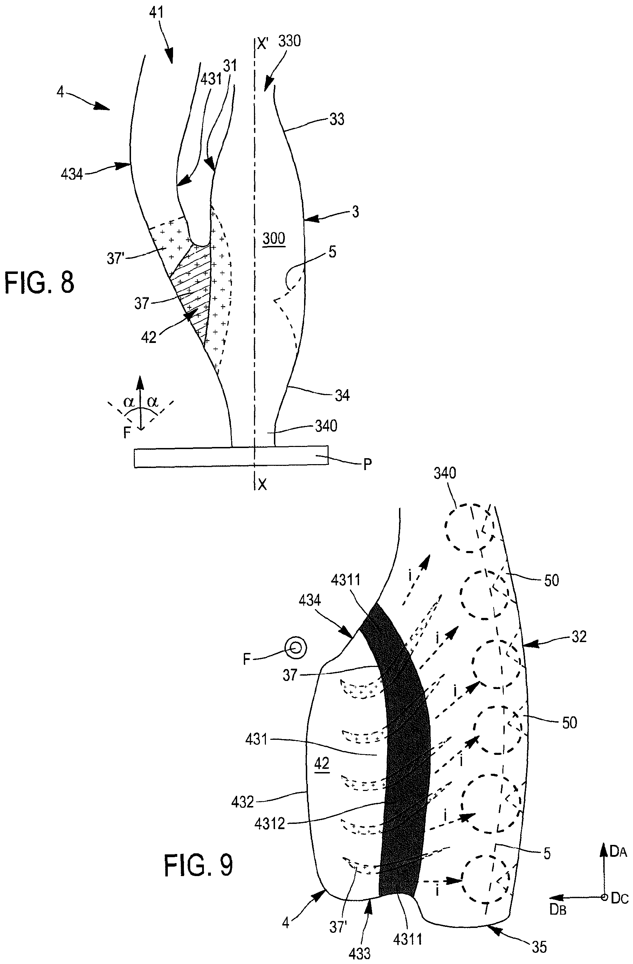

Le boîtier 2 comprend un corps 3 délimitant une enceinte 300 et un conduit d'amenée d'air coudé 4 (voir figure 8).

Comme on peut le voir sur les figures 3, 6 et 12, le corps 3 présente deux parois opposées, à savoir une paroi extérieure 31 et une paroi intérieure 32, cette dernière étant dénommée ainsi car elle est destinée à être positionnée en face de la surface extérieure du carter C à refroidir et car elle est tournée vers l'intérieur de la turbine.

La paroi intérieure 32 est percée de perforations d'éjection d'air 320.

Le corps 3 présente une forme générale allongée. L'un des deux bords longitudinaux 311 de la paroi extérieure 31 rejoint l'un des deux bords longitudinaux 321 de la paroi intérieure 32, de façon à définir une première série de conduites de sortie 33, situées d'un premier côté longitudinal du corps 3 et l'autre des deux bords longitudinaux 311 de la paroi extérieure 31 rejoint l'autre des deux bords longitudinaux 321 de la paroi intérieure 32, de façon à définir une second série d'un nombre identique de conduites de sortie 34, situées d'un second côté longitudinal du corps 3.

Ainsi, par exemple sur les figures 3 et 6, chaque série comprend huit conduites de sortie 33 et huit conduites de sortie 34.

Chaque conduite de sortie 33 est sensiblement alignée avec une conduite de sortie 34 située en regard, avec laquelle elle forme une paire de conduites.

Pour faciliter l'écoulement des flux d'air et réduire les pertes de charge, les géométries des surfaces des conduites 33 et 34 sont lissées, c'est-à-dire que leurs sections évoluent de manière progressive jusqu'aux ouvertures de sortie 330, 340 respectives de chaque conduite de sortie 33, 34.

Ainsi, de préférence, les conduites 33, 34 présentent une forme en entonnoir qui se rétrécie jusqu'aux ouvertures de sortie 330, 340, cette forme étant visible sur les conduites 33 de la figure 4. De préférence également, les zones de jonction 30 entre la paroi intérieure 32 et la paroi extérieure 31 du corps 3, dans l'espace entre deux conduites de sortie successives 33 ou 34 d'une même série de conduites, présentent une forme de paraboloïde hyperbolique, comme on peut le voir sur la figure 5.

Grâce à ces formes spécifiques, on obtient un très bon écoulement des flux d'air tout en étant compatible avec des angles de fabrication d'un procédé de fabrication additive sur lit de poudre, qui sera décrit ultérieurement.

De plus, cette géométrie permet d'avoir une épaisseur du boîtier 2 optimisée et de réduire la masse globale du boîtier tout en ayant une bonne résistance mécanique de celui-ci, y compris entre deux conduites de sortie voisines.

Les ouvertures de sortie 330 ou 340 sont de préférence de section transversale circulaire et leur diamètre intérieur correspond au diamètre extérieur des rampes de refroidissement 10. Ainsi ces dernières peuvent être soudées dans les ouvertures de sortie.

Par ailleurs, l'un des deux bords transversaux 312 de la paroi extérieure 31 rejoint l'un des deux bords transversaux 322 de la paroi intérieure 32, de façon à définir une extrémité 35, dite « avant », du corps 3 et l'autre des deux bords transversaux 312 de la paroi extérieure 31 rejoint l'autre des deux bords transversaux 322 de la paroi intérieure 32, de façon à définir une extrémité 36, dite « arrière », du corps 3. Les dénominations « avant » et « arrière » sont données par référence aux extrémités avant AV et arrière AR de la turbine lorsque le boitier 2 du dispositif de refroidissement 1 est positionné autour du carter de ladite turbine.

Le conduit d'amenée d'air 4 présente une embouchure d'entrée 41 et une embouchure de sortie 42. Il est coudé à proximité de son embouchure de sortie 42, comme cela apparait mieux sur les figures 6 et 8. De préférence, il s'évase en largeur depuis son embouchure d'entrée 41 jusqu'à son embouchure de sortie 42, comme on le voit sur la figure 3.

L'embouchure d'entrée 41 est de préférence de section circulaire. Elle est destinée à être raccordée à une source d'alimentation en air sous pression, non représentée sur les figures.

L'embouchure de sortie 42 évasée est raccordée à la paroi extérieure 31 du corps 3 au niveau d'une embouchure d'entrée 38 (voir figure 8) ménagée dans cette paroi extérieure 31, de sorte que le conduit 4 est en communication de fluide avec l'intérieur du corps 3. Sur le mode de réalisation de la figure 3, ce raccordement est réalisé dans la partie avant de la paroi extérieure 31. Toutefois, l'embouchure de sortie 42 pourrait être plus évasée et le raccordement s'effectuerait alors de la partie avant à la partie arrière de la paroi extérieure 31.

De préférence également, l'embouchure de sortie 42 du conduit d'amenée d'air 4 débouche dans le corps 3 à mi-distance entre les ouvertures de sortie 330, 340.

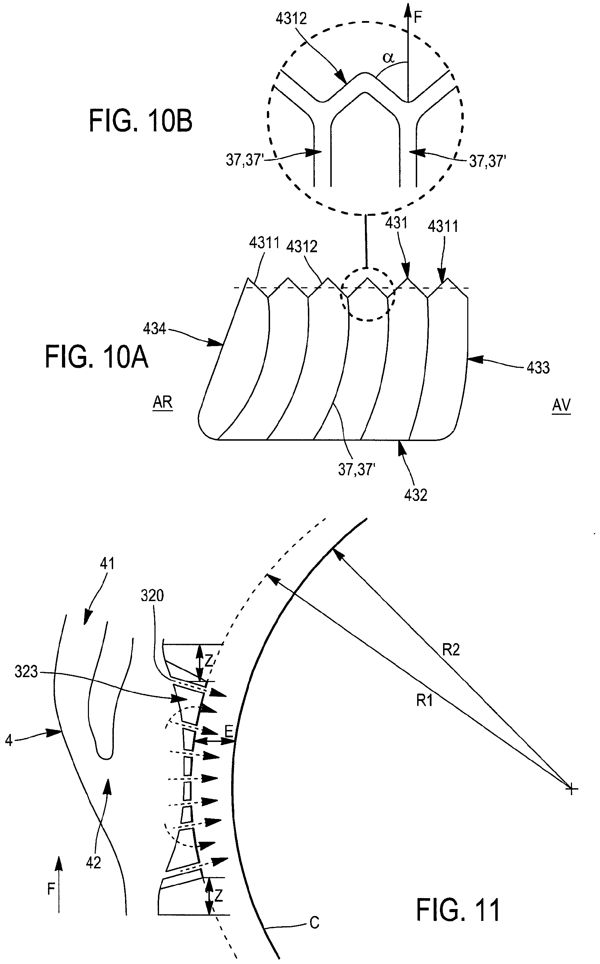

Par convention, on considère que la paroi qui constitue ledit conduit 4 présente quatre portions longitudinales, à savoir une portion intérieure 431, une portion extérieure opposée 432 et deux portions latérales 433, 434 joignant la portion intérieure à ladite portion extérieure. Ces portions sont mieux visibles sur la figure 10A. La portion intérieure 431 s'étend en face de la paroi extérieure 31 du corps 3 et plus précisément, du fait de la forme coudée du conduit 4, en face de la partie de la paroi extérieure 31 qui s'étend vers le premier côté du corps 3 où se trouvent les conduites de sortie 33 de la première série de conduites (conduites tournées vers le haut sur la figure 6).

Afin de diriger et de répartir au mieux l'air provenant du conduit 4 en direction des différentes conduites de sortie 33, 34 du corps 3, au moins une cloison 37 de répartition axiale (selon la direction axiale D_{A}) de l'air est prévue à l'intérieur de l'embouchure de sortie 42 du conduit d'amenée d'air 4. De préférence, il y a plusieurs cloisons 37, (par exemple cinq sur les figures 9 et 10).

Comme on peut le voir sur la figure 8, selon un premier mode de réalisation, chaque cloison 37 s'étend au minimum depuis la face interne de la portion intérieure 431 du conduit d'amenée d'air 4 jusqu'à la face interne de la portion extérieure 434 du conduit 4 (surface représentée en hachuré sur les figures 8 et 9).

Selon un second mode de réalisation, chaque cloison, référencée alors 37', s'étend plus largement vers l'intérieur du conduit 4 et/ou vers l'intérieur du corps 3. Sur la figure 8, la cloison 37' s'étend depuis la face interne d'une partie de la portion intérieure 431 du conduit d'amenée d'air 4 et de la paroi extérieure 31 du premier côté du corps 3 jusqu'à la face interne de la portion extérieure 434 du conduit 4 (surface représentée avec des croix entre les deux lignes en pointillés sur les figures 8 et 9).

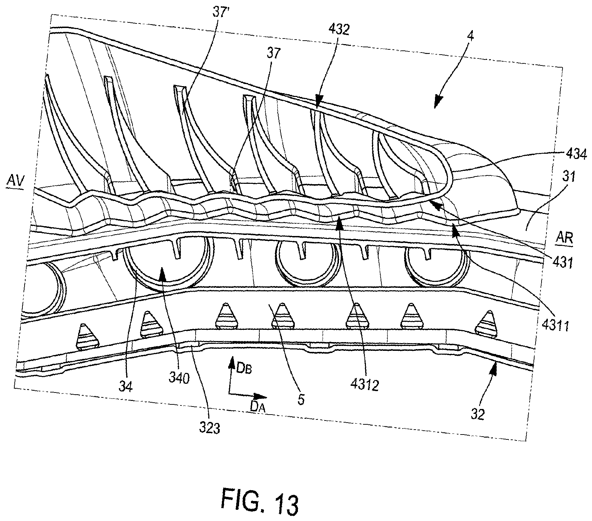

En outre, de façon avantageuse, et comme on peut le voir sur les figures 9 et 13, chaque cloison 37, 37' est incurvée depuis l'embouchure de sortie 42 du conduit d'amenée d'air 4 en direction de la paroi intérieure 32 du corps 3 et de l'extrémité arrière 36 du corps 3.

De préférence également, et comme on peut le voir sur les figures 10A et 13, chaque cloison 37, 37' est incurvée depuis la portion intérieure 431 en direction à la fois de la portion extérieure 432 et de l'extrémité arrière du corps 3 (à gauche sur la figure 10A).

Cette forme aérodynamique des cloisons 37, 37' favorise le guidage des flux d'air (symbolisés par les flèches i en figures 6 et 9), permet de réduire les pertes de charge et de répartir de façon contrôlée les flux vers les différentes ouvertures de sortie 330, 340. On comprend aisément que le nombre, l'orientation et la géométrie 3D de chaque cloison 37, 37' peuvent être adaptés pour distribuer au mieux le flux d'air en fonction du nombre de rampes à alimenter et de l'encombrement souhaité du boîtier 2.

Comme évoqué précédemment, le boîtier 2 est avantageusement fabriqué par fabrication additive par fusion laser sur lit de poudre. Il est de préférence réalisé en métal, par exemple en Inconel 718.

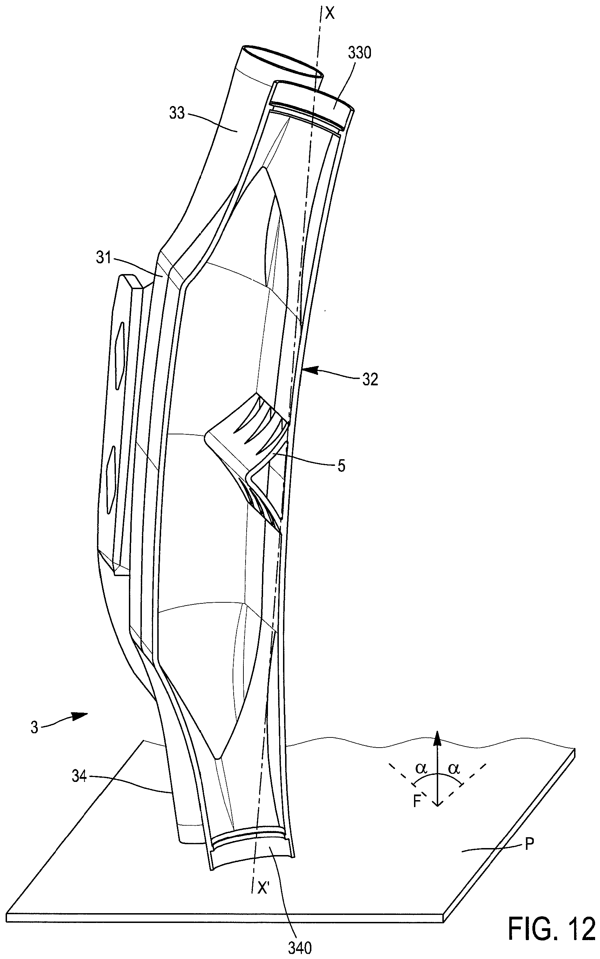

La fabrication additive se réalise par dépôt de couches successives sur un support horizontal P représenté de façon partielle sur les figures 6 et 12 et de façon schématique sur la figure 8.

Plus précisément, une couche d'une poudre du matériau constituant le boîtier 2 est disposée sur le support P, puis la poudre est fondue en certains points par balayage à l'aide d'un faisceau laser. Cette étape est répétée jusqu'à obtention du boîtier 2.

La direction de construction est verticale et le sens de construction du boîtier 2 est représenté par la flèche verticale F de bas en haut.

On notera que la direction de construction verticale est parallèle ou sensiblement parallèle à un axe de référence X-X' représenté en figure 12 et qui joint le centre d'une ouverture de sortie 340 d'une conduite 34 du second côté longitudinal du corps 3 au centre d'une ouverture de sortie 330 d'une conduite 33 du premier côté longitudinal du corps 3, située en face (autrement dit qui joint les centres des deux ouvertures d'une paire de conduites).

La construction démarre par les conduites 34 (en bas sur la figure 12).

Afin de garantir la faisabilité du boîtier 2 par un tel procédé de fabrication additive, il est préférable que les parois intérieure 32, extérieure 31 du corps 3 et les différentes portions 431 à 434 du conduit 4 forment par rapport à la direction verticale de construction, un angle α égal au maximm à 50°, ce qui permet d'éviter tout supportage pendant la fabrication ou un usinage de parties superflues après fabrication. En d'autres termes, toutes les parois ne doivent pas dépasser cet angle de 50° pour ne pas être trop horizontales et risquer de ne pas être supportées par la couche de poudre non fusionnée située en dessous. En d'autres termes également, les différentes parois du boîtier 2 forment au maximum un angle α de 50° avec l'axe de référence X-X' précité.

En outre, les cloisons 37, 37' permettent de supporter la portion intérieure 431 du conduit 4 qui se trouve au-dessus (représentée en grisé sur la figure 9 et visible sur la figure 10A).

Plus précisément, et comme on peut le voir sur les figures 10A et 10B, au niveau du raccordement de l'embouchure 42 sur la paroi extérieure 31, la portion intérieure 431 présente plusieurs zones de raccordement en forme de V, à savoir une zone de raccordement en V 4311 entre la portion latérale 433, respectivement 434, du conduit 4 et la cloison de répartition d'air 37, 37' située à côté. S'il y a au moins deux cloisons 37, 37', la portion 431 présente également une zone de raccordement en forme de V 4312 entre deux cloisons 37, 37' voisines.

Ces zones de raccordement en V sont également visibles sur la figure 13. Elles s'étendent selon la direction axiale D_{A}.

La pointe du V est saillante vers l'espace ménagé entre le conduit 4 et le corps 3 (vers le haut de la figure 6).Cet espace a également une forme en V ou en U et s'étend dans la direction radiale D_{B}.

Enfin, les pans de chaque côté du V forment un angle α au maximum de 50° par rapport à la direction verticale de fabrication (voir l'angle par rapport à la flèche F).

Le V inversé forme une sorte de voûte qui peut aussi être fabriquée par fabrication additive sans support additionnel.

Comme on peut le voir sur la vue en coupe de la figure 8, l'embouchure de sortie 42 du conduit d'amenée d'air 4 est raccordée à la paroi extérieure 31 du corps 3 de façon inclinée, de sorte qu'elle tend à guider l'air davantage vers les conduites de sortie 34 du second côté (vers le bas de la figure). De façon avantageuse, et afin de compenser le phénomène précité, le boîtier 2 comprend un bec 5 de répartition circonférentielle du flux d'air, disposé à l'intérieur du corps 3 et qui tend à forcer l'écoulement d'une partie du flux d'air vers le premier côté (vers le haut sur la figure 8), pour mieux équilibrer la répartition des flux de part et d'autre du boîtier 2.

Ce bec 5 a la forme d'une lamelle pliée en deux, à section transversale en V, disposée au centre ou sensiblement au centre de la paroi intérieure 32 du corps 3, de façon que la pointe du V fasse saillie vers l'intérieur du corps.

Ce bec 5 s'étend de préférence de l'extrémité avant à l'extrémité arrière du corps 3 (voir également la figure 12).

Ce bec 5 est muni d'une pluralité d'encoches 50 qui autorisent la circulation de l'air depuis l'intérieur d'un corps 3 en direction des perforations d'éjection d'air 320 et qui permettent de dépoudrer la pièce c'est-à-dire d'éliminer efficacement, en fin de fabrication, les couches de poudre se trouvant entre le bec 5 et la paroi 32 et qui n'ont pas été fusionnées par le faisceau laser.

La forme de ce bec 5 et ses angles d'inclinaison par rapport au sens de construction vertical F sont compatibles avec un procédé de fabrication additive (inférieurs à 50°).

Comme mentionné précédemment, la paroi intérieure 32 du corps 3 présente des perforations déjection d'air 320 qui mettent en communication l'intérieur dudit corps avec le carter C à refroidir.

Ces perforations 320 sont alignées sous forme d'au moins une ligne de perforations qui s'étend pour chaque paire d'ouvertures de sortie, d'une ouverture de sortie 330 située du premier côté du corps 3 jusqu'à l'ouverture de sortie 340 située du second côté du corps 3. De préférence, et comme cela est visible sur la figure 4, on a deux lignes parallèles de perforations dont les perforations 320 sont décalées d'un demi-pas.

De préférence, et afin d'améliorer encore l'efficacité du refroidissement par jets d'air, la paroi intérieure 32 du corps 3 présente des bandes 323 formant une surépaisseur de matière, chaque bande 323 s'étendant depuis une ouverture de sortie 330 à une ouverture de sortie 340 de la même paire d'ouvertures de sortie.

Comme on peut le voir sur la figure 11, la surface intérieure de cette bande en surépaisseur 323 (c'est-à-dire la surface tournée vers le carter C) est incurvée de l'ouverture 330 à l'ouverture 340 selon une forme en arc de cercle dont le rayon R1 est supérieur au rayon R2 de la section circulaire du carter C à refroidir situé en face. Les perforations 320 sont ménagées au travers de cette bande de matière 323 en surépaisseur.

On obtient ainsi un entrefer E constant entre la sortie des perforations 320 et le carter C. De plus, les perforations 320 s'étendent ainsi sur une plus grande partie du boîtier 2 et les zones Z non refroidies du carter C sont réduites.

Enfin, de façon avantageuse, et comme on peut le voir sur la figure 3, l'extrémité avant 35 et/ou l'extrémité arrière 36 du boîtier 3 est munie d'un élément de fixation 6 du boîtier 2 sur le carter C à refroidir.

Cet élément de fixation 6 est par exemple une bride 61 ou une patte de fixation 62. Il est monobloc avec le corps 3.

De préférence, la bride de fixation 61 et la patte de fixation 62 possèdent une portion plane 610, respectivement 620, permettant la fixation sur une surface plane. En outre, les parties de jonction 611, respectivement 621, entre la portion plane 610, respectivement 620, et le corps 3 sont formées avec des angles compatibles avec une fabrication additive sans support de construction additionnel.

## Revendications

1. Boitier (2) d'alimentation en air sous pression d'un dispositif de refroidissement par jets d'air (1) d'un carter externe (C) de turbine d'une turbomachine, ce boîtier comprenant un conduit coudé d'amenée d'air (4) et un corps (3) délimitant une enceinte (300), ce corps présentant une paroi extérieure (31) et une paroi intérieure (32) opposées s'étendant selon une direction axiale (D_{A}), la paroi intérieure (32) du corps étant pourvue d'une pluralité de perforations d'éjection d'air (320), les bords longitudinaux respectifs (321, 311) des deux parois intérieure (32) et extérieure (31) du corps se rejoignant pour définir une première série de conduites de sortie (33) situées d'un premier côté longitudinal du corps (3) et une seconde série d'un nombre identique de conduites de sortie (34) situées d'un second côté longitudinal du corps, chaque conduite de sortie (33, 34) étant munie d'une ouverture de sortie (330, 340) configurée pour être raccordée à une rampe de refroidissement (10) du dispositif de refroidissement (1), ledit conduit d'amenée d'air (4) présentant une portion intérieure (431), une portion extérieure (432) opposée et deux portions latérales (433, 434) joignant la portion intérieure (431) à la portion extérieure (432), **caractérisé en ce que** ce boîtier (2) est monobloc, **en ce que** ledit conduit d'amenée d'air coudé (4) est raccordé à la paroi extérieure (31) du corps de façon que son embouchure de sortie (42) débouche dans ladite enceinte (300) et que sa portion intérieure (431) soit située en vis-à-vis de la partie de la paroi extérieure (31) du corps (3) qui s'étend en direction du premier côté dudit corps, et **en ce que** ledit boîtier (2) comprend au moins une cloison (37, 37') de répartition de l'air, disposée dans l'embouchure de sortie (42) du conduit d'amenée d'air (4), cette cloison (37, 37') joignant la face interne de la portion intérieure (431) du conduit d'amenée d'air (4) à la face interne de la portion extérieure (432) du conduit d'amenée d'air.

2. Boitier d'alimentation en air sous pression selon la revendication 1, **caractérisé en ce que** la portion intérieure (431) du conduit d'amenée d'air (4) présente, au niveau où l'embouchure de sortie (42) de celui-ci se raccorde à la paroi extérieure (31) du corps (3), une zone de raccordement (4311) en forme de V qui s'étend entre la portion latérale (433, 434) dudit conduit d'amenée d'air (4) et la cloison de répartition de l'air (37, 37') située à côté de cette portion latérale et/ou une zone de raccordement (4312) en forme de V ,qui s'étend entre deux cloisons voisines de répartition de l'air (37, 37'), selon la direction axiale (D_{A}) du boîtier (2), la pointe du V faisant saillie dans l'espace situé entre la portion intérieure (431) du conduit d'amenée d'air (4) et la partie de la paroi extérieure (31) du corps (3) adjacente audit conduit d'amenée d'air (4).

3. Boitier d'alimentation en air sous pression selon la revendication 1 ou 2, **caractérisé en ce que** la cloison de répartition d'air (37') se prolonge vers l'intérieur du conduit d'amenée d'air (4) et/ou vers l'intérieur du corps (3).

4. Boitier d'alimentation en air sous pression selon l'une quelconque des revendications précédentes, **caractérisé en ce que** les bords transversaux (312, 322) des deux parois intérieure (31) et extérieure (32) du corps (3) se rejoignent au niveau d'une extrémité arrière (36) du corps et d'une extrémité avant (35) du corps et **en ce que** l'embouchure de sortie (42) du conduit d'amenée d'air (4) est raccordé à la partie avant de la paroi extérieure (31) du corps située à proximité de ladite extrémité avant (35) du corps et **en ce que** ladite cloison de répartition de l'air (37, 37') est incurvée depuis l'embouchure de sortie (42) du conduit d'amenée d'air (4) en direction de l'extrémité arrière (36) du corps.

5. Boitier d'alimentation en air sous pression selon la revendication 4, **caractérisé en ce que** ladite cloison de répartition de l'air (37, 37') est incurvée depuis la portion intérieure (431) du conduit d'amenée d'air (4) en direction de la portion extérieure (432) du conduit d'amenée d'air (4) et de l'extrémité arrière (36) du corps.

6. Boitier d'alimentation en air sous pression selon l'une quelconque des revendications précédentes, **caractérisé en ce que** chaque conduite de sortie (33, 34) a la forme d'un entonnoir et **en ce que** la zone de jonction (30) entre la paroi intérieure (32) du corps (3) et la paroi extérieure (31) du corps (3) entre deux ouvertures de sortie successives (330, 340) d'une même série de conduites de sortie (33, 34) est en forme de paraboloïde hyperbolique.

7. Boitier d'alimentation en air sous pression selon l'une quelconque des revendications précédentes, **caractérisé en ce qu'**il comprend à l'intérieur du corps (3), au moins un bec (5) de répartition circonférentielle du flux d'air, en forme de lamelle à section transversale en V, qui s'étend depuis le centre ou sensiblement depuis le centre de la paroi intérieure (32) du corps (3), de façon que la pointe du V fasse saillie dans l'enceinte (300) du corps, ce bec (5) étant muni d'une pluralité d'encoches (50) autorisant le passage de l'air depuis l'intérieur du corps (3) vers les perforations d'éjection d'air (320).

8. Boitier d'alimentation en air sous pression selon l'une quelconque des revendications précédentes, **caractérisé en ce que** la paroi intérieure (32) du corps comprend plusieurs bandes (323) formant une surépaisseur de matière, chaque bande (323) s'étendant depuis une ouverture de sortie (330) située du premier côté du corps jusqu'à une ouverture de sortie (340) située du second côté du corps et avec laquelle elle est alignée, **en ce que** les perforations d'éjection d'air (320) sont ménagées au travers de ladite bande en surépaisseur (323), et **en ce que** cette bande en surépaisseur (323) est incurvée selon une forme en arc de cercle dont le rayon (R1) est supérieur au rayon (R2) de la section circulaire du carter (C) à refroidir en regard de laquelle ladite bande en surépaisseur est destinée à être positionnée.

9. Boitier d'alimentation en air sous pression selon l'une quelconque des revendications précédentes, **caractérisé en ce que** les bords transversaux (312, 322) des deux parois intérieure (31) et extérieure (32) du corps (3) se rejoignent au niveau d'une extrémité arrière (36) du corps et d'une extrémité avant (35) du corps et **en ce que** ledit boîtier (2) présente au niveau de son extrémité arrière (36) et/ou de son extrémité avant (35), un élément de fixation (6) du boîtier sur le carter à refroidir, tel qu'une patte de fixation (62) ou une bride de fixation (61).

10. Boitier d'alimentation en air sous pression selon l'une quelconque des revendications précédentes, **caractérisé en ce que** les différentes parois du corps (3) et du conduit d'amenée d'air (4) présentent un angle maximal de 50° par rapport à un axe de référence (X-X') du boitier joignant le centre d'une ouverture de sortie (340) d'une conduite de sortie (34) du second côté longitudinal du corps (3) au centre d'une ouverture (330) de sortie d'une conduite de sortie (33) du premier côté longitudinal du corps (3), située en face.

11. Dispositif (1) de refroidissement par jets d'air d'un carter (C) externe de turbine d'une turbomachine, **caractérisé en ce qu'**il comprend une pluralité de rampes de refroidissement perforées (10), incurvées et configurées pour être disposées autour dudit carter externe (C) et au moins un boitier (2) d'alimentation en air sous pression selon l'une quelconque des revendications 1 à 10, les ouvertures de sortie (330, 340) de ce boitier (2) étant raccordées aux extrémités desdites rampes de refroidissement (10), de façon à permettre l'alimentation en air sous pression de celles-ci.

12. Turbine, notamment basse pression, d'une turbomachine, telle qu'un turboréacteur ou un turbopropulseur d'avion, comprenant un carter externe (C), **caractérisée en ce qu'**elle comprend un dispositif (1) de refroidissement par jets d'air de ce carter selon la revendication 11.

13. Procédé de fabrication additive par fusion laser sur lit de poudre d'un boitier (2) d'alimentation en air sous pression selon l'une quelconque des revendications 1 à 10, **caractérisé en ce qu'**il comprend une étape de dépôt sur un support horizontal (P), d'un lit d'une poudre du matériau constituant ledit boîtier (2), puis de balayage par faisceau laser de certains points de ce lit de poudre pour fondre ladite poudre la durcir et **en ce que** cette étape est répétée jusqu'à obtenir ledit boitier d'alimentation en air sous pression (2), ces différentes couches de poudre successives étant disposées dans des plans perpendiculaires a une direction de fabrication verticale, cette direction de fabrication verticale étant parallèle ou sensiblement parallèle à un axe de référence (X-X') du boitier joignant le centre d'une ouverture de sortie (340) d'une conduite de sortie (34) du second côté longitudinal du corps (3) au centre d'une ouverture de sortie (330) d'une conduite de sortie (33) du premier côté longitudinal du corps 3, située en face, la fabrication du boîtier (2) commençant par les conduites de sortie (34) du second côté longitudinal du corps (3)

## Patentansprüche

1. Druckluftversorgungseinheit (2) für eine Luftstrahlkühlvorrichtung (1) eines äußeren Turbinengehäuses (C) einer Turbomaschine, wobei diese Einheit eine gekrümmte Luftzufuhrleitung (4) und einen Körper (3) umfasst, der ein Behältnis (300) begrenzt, wobei dieser Körper eine Außenwand (31) und eine Innenwand (32) aufweist, die sich gegenüberliegend in einer axialen Richtung (Dₐ) erstrecken, wobei die Innenwand (32) des Körpers mit einer Vielzahl von Luftauslassperforationen (320) versehen ist, wobei sich die jeweiligen Längsränder (321, 311) der zwei Wände, der Innenwand (32) und der Außenwand (31), des Körpers treffen, um eine erste Reihe Ausgangsleitungen (33) zu definieren, die sich auf einer ersten Längsseite des Körpers (3) befinden, und eine zweite Reihe in einer identischen Anzahl von Ausgangsleitungen (34), die sich auf einer zweiten Längsseite des Körpers befinden, wobei jede Ausgangsleitung (33, 34) mit einer Ausgangsöffnung (330, 340) versehen ist, die ausgelegt ist, um mit einer Kühlrampe (10) der Kühlvorrichtung (1) verbunden zu sein, wobei die Luftzufuhrleitung (4) einen inneren Abschnitt (431), einen gegenüberliegenden äußeren Abschnitt (432) und zwei seitliche Abschnitte (433, 434) aufweist, die den inneren Abschnitt (431) mit dem äußeren Abschnitt (432) verbinden, **dadurch gekennzeichnet, dass** diese Einheit (2) einteilig ist, dass die gekrümmte Luftzufuhrleitung (4) mit der Außenwand (31) des Körpers derart verbunden ist, dass ihre Ausgangsmündung (42) im Behältnis (300) ausmündet und dass sich ihr innerer Abschnitt (431) gegenüber dem Teil der Außenwand (31) des Körpers (3) befindet, der sich in Richtung der ersten Seite des Körpers erstreckt, und dass die Einheit (2) mindestens eine Luftverteilungstrennwand (37, 37') umfasst, die in der Ausgangsmündung (42) der Luftzufuhrleitung (4) angeordnet ist, wobei diese Trennwand (37, 37') die innere Fläche des inneren Abschnitts (431) der Luftzufuhrleitung (4) mit der inneren Fläche des äußeren Abschnitts (432) der Luftzufuhrleitung verbindet.

2. Druckluftversorgungseinheit nach Anspruch 1, **dadurch gekennzeichnet, dass** der innere Abschnitt (431) der Luftzufuhrleitung (4) in dem Bereich, wo sich deren Ausgangsmündung (42) an die Außenwand (31) des Körpers (3) anschließt, eine V-förmige Anschlusszone (4311) aufweist, die sich zwischen dem seitlichen Abschnitt (433, 434) der Luftzufuhrleitung (4) und der Luftverteilungstrennwand (37, 37') erstreckt, die sich neben diesem seitlichen Abschnitt befindet, und/oder eine V-förmige Anschlusszone (4312), die sich zwischen zwei benachbarten Luftverteilungstrennwänden (37, 37') gemäß der axialen Richtung (D_{A}) der Einheit (2) erstreckt, wobei die Spitze des V in den Raum hineinragt, der sich zwischen dem inneren Abschnitt (431) der Luftzufuhrleitung (4) und dem Teil der Außenwand (31) des Körpers (3) befindet, der zu der Luftzufuhrleitung (4) benachbart ist.

3. Druckluftversorgungseinheit nach Anspruch 1 oder 2, **dadurch gekennzeichnet, dass** sich die Luftverteilungstrennwand (37') zum Inneren der Luftzufuhrleitung (4) und/oder zum Inneren des Körpers (3) verlängert.

4. Druckluftversorgungseinheit nach einem der vorangehenden Ansprüche, **dadurch gekennzeichnet, dass** sich die transversalen Ränder (312, 322) der zwei Wände, der Innenwand (31) und der Außenwand (32), des Körpers (3) im Bereich eines hinteren Endes (36) des Körpers und eines vorderen Endes (35) des Körpers treffen und dass die Ausgangsmündung (42) der Luftzufuhrleitung (4) an den vorderen Teil der Außenwand (31) des Körpers angeschlossen ist, der sich in der Nähe des vorderen Endes (35) des Körpers befindet und dass die Luftverteilungstrennwand (37, 37') ab der Ausgangsmündung (42) der Luftzufuhrleitung (4) in Richtung des hinteren Endes (36) des Körpers gekrümmt ist.

5. Druckluftversorgungseinheit nach Anspruch 4, **dadurch gekennzeichnet, dass** die Luftverteilungstrennwand (37, 37') ab dem inneren Abschnitt (431) der Luftzufuhrleitung (4) in Richtung des äußeren Abschnitts (432) der Luftzufuhrleitung (4) und des hinteren Endes (36) des Körpers gekrümmt ist.

6. Druckluftversorgungseinheit nach einem der vorangehenden Ansprüche, **dadurch gekennzeichnet, dass** jede Ausgangsleitung (33, 34) die Form eines Trichters hat und dass die Verbindungszone (30) zwischen der Innenwand (32) des Körpers (3) und der Außenwand (31) des Körpers (3) zwischen zwei aufeinanderfolgenden Ausgangsöffnungen (330, 340) derselben Reihe von Ausgangsleitungen (33, 34) in Form eines hyperbolischen Paraboloids ist.

7. Druckluftversorgungseinheit nach einem der vorangehenden Ansprüche, **dadurch gekennzeichnet, dass** sie im Inneren des Körpers (3) mindestens einen Schnabel (5) für die umfangsmäßige Verteilung des Luftstrahls in Lamellenform mit V-förmigem Querschnitt umfasst, der sich ab dem Zentrum oder etwa ab dem Zentrum der Innenwand (32) des Körpers (3) derart erstreckt, dass die Spitze des V in das Gehäuse (300) des Körpers hineinragt, wobei dieser Schnabel (5) mit einer Vielzahl von Schlitzen (50) versehen ist, die den Durchgang der Luft ab dem Inneren des Körpers (3) zu den Luftauslassperforationen (320) gestatten.

8. Druckluftversorgungseinheit nach einem der vorangehenden Ansprüche, **dadurch gekennzeichnet, dass** die Innenwand (32) des Körpers mehrere Bänder (323) umfasst, die eine Materialüberdicke bilden, wobei sich jedes Band (323) ab einer Ausgangsöffnung (330), die sich auf der ersten Seite des Körpers befindet, bis zu einer Ausgangsöffnung (340) erstreckt, die sich auf der zweiten Seite des Körpers befindet und mit der sie fluchtet, dass die Luftauslassperforationen (320) das überdicke Band (323) durchqueren und dass dieses überdicke Band (323) gemäß einem Kreisbogen gekrümmt ist, dessen Radius (R1) größer als der Radius (R2) des kreisförmigen Querschnitts des zu kühlenden Gehäuses (C) ist, dem zugewandt das überdicke Band bestimmt ist, positioniert zu sein.

9. Druckluftversorgungseinheit nach einem der vorangehenden Ansprüche, **dadurch gekennzeichnet, dass** sich die transversalen Ränder (312, 322) der zwei Wände, der Innenwand (31) und der Außenwand (32), des Körpers (3) im Bereich eines hinteren Endes (36) des Körpers und eines vorderen Endes (35) des Körpers treffen und dass die Einheit (2) im Bereich ihres hinteren Endes (36) und/oder ihres vorderen Endes (35) ein Befestigungselement (6) der Einheit auf dem zu kühlenden Gehäuses wie z. B. eine Befestigungslasche (62) oder einen Befestigungsflansch (61) aufweist.

10. Druckluftversorgungseinheit nach einem der vorangehenden Ansprüche, **dadurch gekennzeichnet, dass** die verschiedenen Wände des Körpers (3) und der Luftzufuhrleitung (4) einen Winkel von maximal 50° im Verhältnis zu einer Referenzachse (X-X') der Einheit aufweisen, die das Zentrum einer Ausgangsöffnung (340) einer Ausgangsleitung (34) der zweiten Längsseite des Körpers (3) mit dem Zentrum einer Ausgangsöffnung (330) einer Ausgangsleitung (33) der ersten Längsseite des Körpers (3), die sich gegenüber befindet, verbindet.

11. Kühlvorrichtung (1) durch Druckluft eines äußeren Turbinengehäuses (C) einer Turbomaschine, **dadurch gekennzeichnet, dass** sie eine Vielzahl perforierter Kühlrampen (10) umfasst, die gekrümmt und ausgelegt sind, um das äußere Gehäuse (C) angeordnet zu sein und mindestens eine Druckluftversorgungseinheit (2) nach einem der Ansprüche 1 bis 10, wobei die Ausgangsöffnungen (330, 340) dieser Einheit (2) an die Enden der Kühlrampen (10) derart angeschlossen sind, dass ihre Versorgung mit Druckluft gestattet ist.

12. Turbine, insbesondere Niederdruck, einer Turbomaschine wie z. B. ein Turboreaktor oder ein TurbopropTriebwerk eines Flugzeugs, umfassend ein äußeres Gehäuse (C), **dadurch gekennzeichnet, dass** sie eine Kühlvorrichtung (1) durch Luftstrahl dieses Gehäuses nach Anspruch 11 umfasst.

13. Additives Herstellungsverfahren durch Laserfusion auf Pulverbett einer Druckluftversorgungseinheit (2) nach einem der Ansprüche 1 bis 10, **dadurch gekennzeichnet, dass** es einen Schritt des Aufbringens auf eine horizontale Unterlage (P) eines Betts aus einem Pulver des Materials umfasst, das die Einheit (2) bildet, dann des Abtastens durch Laserstrahl bestimmter Punkte dieses Pulverbetts, um das Pulver zu schmelzen, es zu härten und dass dieser Schritt wiederholt wird, bis man die Druckluftversorgungseinheit (2) erhält, wobei diese verschiedenen aufeinanderfolgenden Pulverschichten in Ebenen senkrecht zu einer vertikalen Herstellungsrichtung angeordnet sind, wobei diese vertikale Herstellungsrichtung parallel oder etwa parallel zu einer Referenzachse (X-X') der Einheit ist, die das Zentrum einer Ausgangsöffnung (340) einer Ausgangsleitung (34) der zweiten Längsseite des Körpers (3) mit dem Zentrum einer Ausgangsöffnung (330) einer Ausgangsleitung (33) der ersten Längsseite des Körpers (3), die sich gegenüber befindet, verbindet, wobei die Herstellung der Einheit (2) an den Ausgangsleitungen (34) der zweiten Längsseite des Körpers (3) beginnt.

## Claims

1. A pressurized air supply unit (2) of an air-jet cooling device (1) cooling an outer turbine casing (C) of a turbomachine, this unit comprising an air delivery elbow duct (4) and a body (3) delimiting an enclosure (300), this body having an external wall (31) and an internal wall (32) opposite to each other extending along an axial direction (D_{A}), the internal wall (32) of the body being provided with a plurality of air ejection perforations (320), the respective longitudinal edges (321, 311) of the two internal (32) and external (31) walls of the body meeting to define a first series of outlet ducts (33) located on a first longitudinal side of the body (3) and a second series of an identical number of outlet ducts (34) located on a second longitudinal side of the body, each outlet duct (33, 34) being provided with an outlet opening (330, 340) configured to be connected to a cooling manifold (10) of the cooling device (1), said air delivery elbow duct (4) having an internal portion (431), an opposite external portion (432) and two lateral portions (433, 434), each lateral portion (433, 434) joining the internal portion (431) to the external portion (432), **characterized in that** this unit (2) is unitary, **in that** said air delivery elbow duct (4) is connected to the external wall (31) of the body so that its outlet mouth (42) opens out into said enclosure (300) and that its internal portion (431) is located opposite the part of the external wall (31) of the body (3) which extends towards the first side of said body, and **in that** the unit (2) comprises at least one air distribution partition (37, 37') disposed in the outlet mouth (42) of the air delivery duct (4), this air distribution partition (37, 37') joining the inner face of the internal portion (431) of the air delivery elbow duct (4) to the inner face of the external portion (432) of the air delivery elbow duct.

2. The pressurized air supply unit according to claim 1, **characterized in that** the internal portion (431) of the air delivery elbow duct (4) has, at the level where the outlet mouth (42) thereof connects to the external wall (31) of the body (3), a V-shaped connection area (4311) which extends between the lateral portion (433, 434) of said air delivery duct (4) and the air distribution partition (37, 37') located near this lateral portion and/or a V-shaped connection area (4312), which extends between two neighboring air distribution partitions (37, 37'), along the axial direction (D_{A}) of the unit (2), the tip of the V protruding into the space located between the internal portion (431) of the air delivery duct (4) and the part of the external wall (31) of the body (3) adjacent to said air delivery duct (4).

3. The pressurized air supply unit according to claim 1 or 2, **characterized in that** the air distribution partition (37') extends inwardly of the air delivery duct (4) and/or inwardly of the body (3).

4. The pressurized air supply unit according to any one of the preceding claims, **characterized in that** the transverse edges (312, 322) of the two internal (31) and external (32) walls of the body (3) meet at a rear end (36) of the body and a front end (35) of the body and **in that** the outlet mouth (42) of the air delivery duct (4) is connected to the front part of the external wall (31) of the body located in the vicinity of said front end (35) of the body and **in that** said air distribution partition (37, 37') is curved from the outlet mouth (42) of the air delivery duct (4) towards the rear end (36) of the body.

5. The pressurized air supply unit according to claim 4, **characterized in that** said air distribution partition (37, 37') is curved from the internal portion (431) of the air delivery duct (4) towards the external portion (432) of the air delivery duct (4) and the rear end (36) of the body.

6. The pressurized air supply unit according to any one of the preceding claims, **characterized in that** each outlet duct (33, 34) has the shape of a funnel and **in that** the junction area (30) between the internal wall (32) of the body (3) and the external wall (31) of the body (3) between two successive outlet openings (330, 340) of the same series of outlet ducts (33, 34) is in the shape of a hyperbolic paraboloid.

7. The pressurized air supply unit according to any one of the preceding claims, **characterized in that** it comprises inside the body (3), at least one spout (5) for circumferentially distributing the air stream, in the form of a lamella with a V-shaped cross section, which extends from the center or substantially from the center of the internal wall (32) of the body (3), so that the tip of the V of said lamella protrudes in the enclosure (300) of the body, this spout (5) being provided with a plurality of notches (50) authorizing the passage of air from the interior of the body (3) towards the air ejection perforations (320).

8. The pressurized air supply unit according to any one of the preceding claims, **characterized in that** the internal wall (32) of the body comprises several strips (323) forming an extra thickness of material, each strip (323) extending from an outlet opening (330) located on the first side of the body up to an outlet opening (340) located on the second side of the body and with which it is aligned, **in that** the air ejection perforations (320) are formed through said extra thickness strip (323), and **in that** this extra thickness strip (323) is curved along a circular arc shape whose radius (R1) is greater than the radius (R2) of the circular section of the casing (C) to be cooled facing which said extra thickness strip is intended to be positioned.

9. The pressurized air supply unit according to any one of the preceding claims, **characterized in that** the transverse edges (312, 322) of the two internal (31) and external (32) walls of the body (3) meet at a rear end (36) of the body and a front end (35) of the body and **in that** said unit (2) has at its rear end (36) and/or its front end (35), an element for fastening (6) the unit on the casing to be cooled, such as a fastening lug (62) or a fastening flange (61).

10. The pressurized air supply unit according to any one of the preceding claims, **characterized in that** the different walls of the body (3) and of the air delivery duct (4) have a maximum angle of 50° with respect to a reference axis (X-X') of the unit joining the center of an outlet opening (340) of an outlet duct (34) on the second longitudinal side of the body (3) to the center of an outlet opening (330) of an outlet duct (33) on the first longitudinal side of the body (3), located oppositely.

11. An air-jet cooling device (1) cooling an outer turbine casing (C) of a turbomachine, **characterized in that** it comprises a plurality of perforated, curved cooling manifolds (10) configured to be disposed around said outer turbine casing (C) and at least one pressurized air supply unit (2) according to any one of claims 1 to 10, the outlet openings (330, 340) of this unit (2) being connected to the ends of said cooling manifolds (10), so as to allow the pressurized air supply thereto.

12. A turbine, in particular a low-pressure turbine, of a turbomachine, such as a turbojet engine or a turboprop of an aircraft, comprising an outer casing (C), **characterized in that** it comprises an air-jet cooling device (1) cooling this casing according to claim 11.

13. An additive manufacturing method by laser fusion on a powder bed of a pressurized air supply unit (2) according to any one of claims 1 to 10, **characterized in that** it comprises a step of depositing on a horizontal support (P) a powder bed of the material constituting said unit (2), then of scanning by laser beam some points of this powder bed in order to melt said powder and to cure it and **in that** this step is repeated until obtaining said pressurized air supply unit (2), these different successive powder layers being disposed in planes perpendicular to a vertical manufacturing direction, this vertical manufacturing direction being parallel or substantially parallel to a reference axis (X-X') of the unit joining the center of an outlet opening (340) of an outlet duct (34) on the second longitudinal side of the body (3) to the center of an outlet opening (330) of an outlet duct (33) on the first longitudinal side of the body 3, located oppositely, the manufacture of the unit (2) starting with the outlet ducts (34) on the second longitudinal side of the body (3).
